# EUROPEAN PATENT SPECIFICATION

(11) **EP 2 555 841 B1**
(45) Date of publication and mention of the grant of the patent: **16.01.2019**
(21) Application number: 11819103.0
(22) Date of filing: 11.10.2011
(51) Int. Cl.: B01D 3/14, B01D 3/32, B01D 3/00

(54) **MASS TRANSFER COLUMN**
STOFFAUSTAUSCHKOLONNE
COLONNE DE TRANSFERT DE MASSE

(30) Priority: 11.10.2010 IT PI20100115
(43) Date of publication of application: 13.02.2013
(73) Proprietor: Sime S.r.l., 57013 Rosignano Solvay (LI) (IT)
(72) Inventor: FAVILLI, Stefano, I-57016 Rosignano Marittimo (IT); SCIBOLA, Luciano, I-26013 Crema CR (IT)
(74) Representative: Celestino, Marco
(86) International application number: PCT/IB2011/002389
(87) International publication number: WO 2012/049553

(56) References cited:
- EP-A2- 1 980 303
- WO-A1-99/02236
- US-A1- 2008 161 618

## Description

### Field of the invention

The present invention relates to a mass transfer column for performing mass transfer operations between fluid phases.

In particular, the mass transfer column is suitable for carrying out fractional distillation, gas-liquid absorption, stripping, liquid-liquid extraction.

### Prior art - Technical problem

In the process industry, most mass and heat transfer operations between fluid phases are carried out in mass transfer columns. As well known, these are elongated containers that comprise a means for promoting a contact between fluid phases. Columns are known which are well-suited for performing fractional distillation, gas-liquid absorption, stripping, as well as liquid-liquid extraction, like in the case in which a liquid is refined by bringing it into contact with a solvent.

Many industrial processes comprise a plurality of separation steps. Each of these is carried out in a dedicated equipment, in order to ensure the continuity of the operation and to prevent the process streams from contaminating one another. In some cases, heterogeneous but functionally interdependent separations are provided, like in the case of the gas absorption into a liquid solvent, and in the case of the steam stripping regeneration of a spent solvent.

Building a specific mass transfer column for each step means high investment costs. In fact, this requires purchasing, installing and sometimes insulating a large number of equipment units. Moreover, large installation areas are required, which may not be available. For example, this is the case of natural gas and crude oil extraction and treatment platforms, or the case of already existing plants. In particular, the construction of the piping to connect these columns is a problem, in terms of costs and of available space.

Various equipment have been developed to mitigate such drawbacks.

For example, WO9902236 describes an equipment for separating a liquid mixture by fractional distillation, which includes at least two pneumatically and hydraulically interconnected chambers, where a liquid flows from the lower portion of a chamber to the upper portion of a next chamber, and where the liquid is caused to flow by introducing pressurized vapour into the chamber. The equipment comprises transfer ducts that are arranged between the chambers, in their central portion. A steam inlet is arranged in the upper portion of a chamber, and a steam outlet is arranged in the lower portion of the next chamber.

US 2008161618 describes a single column that is suitable for performing consecutive distillation steps, and that is equipped with an inner partition wall which defines a first side and a second side of the column, and where the reflux stream of the first side of the column is fed to the second side. In an exemplary embodiment, the column comprises a double wall comprising an inner passageway, through which the overhead vapour coming from one side flows down to an inlet zone of the other side the column. This way, no piping has to be installed outside the column to transfer the overhead vapour between the two sides of it.

The above-mentioned equipment is conceived for performing consecutive distillation steps, in which the overhead vapour of a first distillation step is further fractioned in a second step distillation step. However, this equipment is not well-suited for a wide range of consecutive distillation processes. In particular, if the temperatures at which the second distillation step is carried out are sensibly lower than the temperatures at which the first distillation step is carried out, such equipment has some considerable drawbacks.

In fact, the portion of the inner surface of the passageway that is arranged most proximate to the chamber or to the column side where the second distillation step is carried out, reaches a temperature lower than the dew point of the overhead vapour. Therefore, a portion of the overhead vapour coming from the first chamber condensates along the passageway. Accordingly, the overhead vapour attains the feed zone of the second side as a liquid-vapour mixture.

This circumstance may reduce the separation efficiency of the second distillation chamber, in particular if the light fraction to be distilled away largely outbalances the heavy fraction. A larger number of stages, and/or a higher reflux ratio is then required to obtain a given separation, than in the case of a vapour-phase feed. Therefore, the equipment must be provided with a larger number of trays or with more packing height, and/or with larger ducts and auxiliary devices, so that a higher reflux stream can be treated.

All the above increases the costs, with respect to the case in which the second chamber is fed with vapour only.

In the case of hydrocarbons mixture, this drawback already occurs if the temperature difference between the two chambers exceeds only 10°C. Obviously, the higher the temperature difference, the more important the condensation, which may already become unacceptable if the temperature difference exceeds 20-25°C.

For instance, this may be the case of Pseudocumene separation from a mixture of mainly-C9 aromatic hydrocarbons. The components that are heavier than Pseudocumene are removed in a first distillation step, and Pseudocumene may be present in the overhead vapour. In a following distillation step, Pseudocumene is removed from the lightest components. At atmospheric pressure, the first distillation step is carried out in a temperature range of 170-200°C, whereas the second one takes place in a temperature range of 160-180°C.

Moreover, the equipment described in the above-mentioned documents is not suitable for carrying out most of the consecutive gas-liquid absorption operations. In these operations, a same gas stream is treated in respective chambers with two different absorption liquids that are suitable for removing specific undesirable components. As well known, the gas stream tends to entrain a certain amount of the absorption liquid, which can be limited by causing the stream to pass through inertial devices such as demisters installed in an upper portion of the chamber. The extent of entrained liquid depends upon the physical characteristics of the gas and of the liquid, and upon process conditions, in particular it depends upon the gas speed.

In many cases, the second absorption step cannot tolerate that the gas contains liquid entrained during the first absorption step. Sometimes, the entrained solvent is difficult to separate, for instance at high operating pressures, if the properties (the density) of the gas and of the solvent liquid are similar, in particular, if their amount is smaller than what can be separated by a conventional demister arranged in an upper portion of the first absorption chamber. Furthermore, the first absorption liquid may be a valuable liquid that should be recovered and regenerated in order to avoid an economical loss.

Such circumstances occur for hydrocarbon gases that require a sweetening treatment, i.e. the removal of acid components, such as CO_{2,} and a dehydration treatment. As a rule, the sweetening treatment is performed by using an aqueous solution of amine as the absorption liquid, in particular of diethanolamine (DEA), whereas the dehydration treatment is carried out by a glycol. The presence of entrained amine in the gas to be dehydrated considerably reduces the efficiency of the glycol as a dehydration means. Moreover, the spent amine solution must be treated in order to recover the amine. The loss of an important amount of amine entrained by the gas would cause unacceptable economic drawbacks.

Therefore, also in the case of the consecutive absorption steps, the drawbacks of the described prior art depend upon the presence of a liquid in a stream which is expected to contain only a gas.

Similarly, the above-mentioned prior art equipment is not well-suited for consecutive solvent-extraction steps, which are performed to extract respective components. In fact, such equipment does not allow feeding a subsequent chamber with a first refined matter that is substantially free from the solvent used in a preceding chamber.

Therefore, also in the case of consecutive solvent-extraction steps, the drawbacks of the described prior art depend upon the presence of a heterogeneous phase in the main liquid stream to be treated.

### Summary of the invention

It is therefore a feature of the present invention to provide a single equipment unit for performing a plurality of consecutive mass transfer steps within respective exchange chambers, said equipment unit overcoming the drawbacks of the prior art.

It is therefore a feature of the present invention to provide such an equipment unit which allows feeding a subsequent exchange chamber with a gas or liquid stream that has to be treated and that comes from a previous chamber, and which allows reducing the amount of a heterogeneous phase in the feed stream of a subsequent process step.

It is a particular feature of the present invention to provide such a mass exchange column for performing consecutive fractional distillation steps, in which the overhead vapour of a first distillation step undergoes a second distillation step, and in which the second distillation step is carried out in a range of temperatures that are sensibly lower than the temperatures of the range in which the first distillation step is carried out.

It is another particular feature of the present invention to provide such a mass exchange column for performing consecutive absorption steps where some components of a gas stream are absorbed into respective absorption liquids, and where the gas mixture fed to a subsequent process step is substantially free from an absorption liquid entrained during the previous process step.

It is a further particular feature of the present invention to provide such a mass exchange column for performing consecutive extraction steps where some components of a liquid stream are extracted by respective liquid solvents, and where the liquid mixture fed to a subsequent process step is substantially free from any solvent entrainment from the previous process step.

These and other objects are achieved by a mass exchange column for performing a mass exchange between a first fluid stream comprising a first fluid phase, and a second fluid stream comprising a second fluid phase, wherein the first fluid phase is selected between a liquid phase and a gas phase, wherein the second fluid phase is a liquid phase, according to Claim 1. The column comprises:
- a vertical elongated container having a longitudinal dividing wall within the container, said container defining with the dividing wall at least a first exchange chamber and a second exchange chamber;
- a feed means for feeding the first fluid stream into the first chamber;
- a first extraction means for extracting the first fluid stream from the second chamber;
- a source of the second stream;
- a second extraction means for extracting the second stream from said column;
- a contact means for causing a contact between the first stream and the second stream, the contact means arranged within the first exchange chamber and/or within the second exchange chamber;
- a longitudinal passageway that extends between an outlet port of the first exchange chamber and an inlet port leading into the second exchange chamber, the passageway arranged in a proximity of the dividing wall, for conveying the first stream from the first exchange chamber into the second exchange chamber;
wherein the contact means and/or the passageway are such that in the passageway the first stream comprises an amount of a substance in the second fluid phase,
whose characteristic is that it comprises:
- along the passageway, a phase separation means that is configured to receive the first stream and to form a main portion of the first stream and a secondary portion of the first stream, the secondary portion comprising at least one part of the amount of substance in second fluid phase;
- a feed means for feeding the main portion of the stream at a predetermined feed height of the second exchange chamber.

The above-defined phase separation means allows to remove the amount of substance in the second fluid phase from the first stream upstream or, at farthest, at the inlet port of the second chamber.

In particular, the contact means can comprise a contact means that is adapted to promote a condensation of the first stream and/or an evaporation of the second stream, which is in the liquid phase. More in particular, the contact means are adapted to assist a fractional distillation step. In this case, the above-defined phase separation means allows to perform consecutive-fractional distillation operations even if a temperature difference exists between the first process step and the second process step that is suitable for causing a condensation of one part of the overhead vapour within the passageway. The separation of the condensed part from the vapour allows to feed the vapours, and preferably also the condensed part, at a convenient height of the second distillation chamber, i.e. at a convenient stage of the second fractional distillation step.

This way, the separation efficiency of the second chamber remains unchanged and it is not substantially necessary to increase either the number of stages or the reflux ratio to take the condensation into account.

In this case, with the expression "source" of the second stream, reference is made to the condensation that takes place during the distillation, which consolidate a descending liquid flow along the distillation chamber.

In particular, the contact means can comprise a contact means that is adapted to assist an absorption step in which at least one gaseous component of the first stream is absorbed into the second stream. In this case, the above-defined phase separation means allows to perform consecutive absorption steps also in the presence of sensible amounts of absorption liquid entrained by the gas at the outlet of the first chamber, without any relevant loss of absorption liquid or any product contamination, and without any substantial loss of efficiency of the second absorption step.

This way, it is possible to extend the advantages that are provided by a passageway arranged inside a partition wall of a divided column to a wide range of consecutive-distillation and consecutive-gas-liquid absorption operations, thus overcoming the drawbacks of the prior art. These advantages include a reduction of installation time and costs, a reduction of possible leakage points, such as piping flange connections and, therefore, also include a safety increase in terms of leakage and/or contamination of process substances. In some instances, also a heat loss reduction is possible.

In this case, the expression "source" of the second stream refers to an external supply means, i.e. a generator and/or a storage of an absorption fluid, as well as to the transfer means that are required for the same.

In particular, the contact means can comprise a contact means that is adapted to assist an extraction step of at least one liquid component of the first stream into the second stream. In this case, the above-defined separation means allows to perform consecutive-solvent-extraction operations, without any significant loss of / contamination by the solvent that is used in the first extraction step. This allows to extend the above-mentioned advantages even to solvent-extraction operation. Also in this case, with the expression "source" of the second stream, reference is made to an external supply means, i.e. to a generator and/or a storage of a solvent, as well as to the transfer means that are required for the same.

In particular, the contact means can comprise a contact means that is adapted to assist an absorption step of at least one liquid component of the second stream into the first stream, which comprises a first gas phase.

The contact means can be selected from the group consisting of:
- mass transfer trays;
- packings;
- structured packed beds;
- a combination of the above contact means.

In particular, the phase separation means comprises a feed means for feeding the secondary portion of the stream to a further predetermined feed height of the second exchange chamber.

In an exemplary embodiment, the phase separation means comprises a settling chamber made within the passageway.

Preferably, the settling chamber has a height greater than or equal to twice the height of a theoretical stage of the second exchange chamber.

In particular the settling chamber has a height greater than or equal to 1000 mm, more in particular, a height greater than or equal to 1200 mm.

Preferably, the settling chamber has a height greater than or equal to about 1/3 of an equivalent inner diameter of the column.

Preferably, the settling chamber is adapted to separate the main portion of the first stream, which is substantially in gas/liquid phase, and has a second transversal dimension, defined perpendicularly to the first transversal dimension, greater or equal to twice an equivalent diameter of an outlet port for the main portion of the first stream.

In an advantageous exemplary embodiment, the settling chamber is provided with a connection means for a level sensor for measuring the level of a head in the settling chamber, the head formed by the fluid phase which has the highest specific weight. The level sensor can be associated with a logical unit for controlling the flowrate of the highest specific weight portion that is supplied into a lower section of the exchange column, or in any case into a column zone that is suitable for the subsequent process steps, where the logical unit is operatively connected with a flowrate regulation means, in particular, it is connected with a regulation valve, in order to operate the regulation means responsive to the head level.

In the case of a rectifying distillation column, the column advantageously comprises a flowrate regulation device for the lowest specific weight portion that is supplied into an upper section or upper exchange chamber of the column, or into a section where it is more convenient, wherein the flowrate regulation device comprises:
- a flowrate regulation means for the lowest specific weight portion, in particular, comprising a regulation valve,
- two devices that comprise pressure sensors and are adapted to generate a first pressure signal and a second pressure signal, respectively, of the overhead vapour of the first exchange chamber and of the second exchange chamber, wherein this logical unit is operatively connected to the flowrate regulation means, in order to operate the regulation means responsive to the difference between the first pressure signal and the second pressure signal.

The column can also comprise a cooling means for cooling the first gas stream, said cooling means arranged along the passageway.

In particular, the cooling means is arranged to cause a condensation of a portion of the first gas stream and is arranged upstream of the phase separation means.

In an exemplary embodiment, the cooling means is a surface cooling means, in particular comprising finned tubes.

The dividing wall can comprise at least one portion which extends along a plane. In another exemplary embodiment, the dividing wall can comprise at least one portion that has a curvilinear cross section. In a further exemplary embodiment, the dividing wall can have a curvilinear and/or polygonal closed cross section, so that the first exchange chamber and the second exchange chamber are an inner chamber and an external exchange chamber, in particular an annular chamber, respectively, or vice-versa.

Preferably, the longitudinal passageway has at least a portion that is arranged within the dividing wall.

The passageway can have a cross section of various shapes, in particular a circular cross section, a quadrangular cross section or a cross section of a different shape. In particular, at the passageway the dividing wall can have an enlarged cross section, a portion of the cross section protruding into at least one of the two chambers.

In particular, the dividing wall comprises two parallel walls and a hollow space defined between the two parallel walls, and the passageway can comprise at least one portion of the hollow space that is limited by the two parallel walls.

The passageway can be made with one or more tubular elements that is/are longitudinally arranged within the dividing wall.

In particular, the inlet port of the second chamber is arranged at an intermediate height between a bottom section and a top section of the second chamber.

The outlet port of the first exchange chamber can be a top outlet port of a top section of the first exchange chamber, so that the passageway is arranged to feed the second exchange chamber with a top product of a separation step that is carried out within the first exchange chamber. The outlet port of the first exchange chamber can also be a bottom outlet port of a bottom section of the first exchange chamber, so that the passageway is arranged to feed the second exchange chamber with a bottom product of a separation step that is carried out within the first exchange chamber. The outlet port of the first exchange chamber can also be an intermediate outlet port of an intermediate section of the first exchange chamber, so that the passageway is adapted to feed the second exchange chamber with a side cut product of a separation step that is carried out within the first exchange chamber.

The above mentioned objects are also achieved by a method, according to Claim 12, for performing a mass exchange operation between a first fluid stream comprising a first fluid phase, and a second fluid stream comprising a second fluid phase, wherein the first fluid phase is selected between a liquid phase and a gas phase, where the second fluid phase is a liquid phase. The method comprising the steps of:
- prearranging a vertical elongated container
- prearranging a longitudinal dividing wall within the vertical elongated container, in order to define at least a first exchange chamber and a second exchange chamber within the container;
- prearranging an outlet port of the first exchange chamber, and an inlet port of the second exchange chamber, and a longitudinal passageway between the outlet port and the inlet port, in a proximity of the dividing wall;
- causing a contact between the first stream and the second stream within the first exchange chamber;
- conveying the first stream between the outlet port of the first exchange chamber and the inlet port of the second exchange chamber,
   in the passageway, the first stream comprising an amount of a substance in the second fluid phase;
- along the passageway, separating a main portion of the first stream and a secondary portion of the first stream from the first stream, the secondary portion comprising at least one part of the amount of substance that is in the second fluid phase;
- feeding the main portion of the first stream at a predetermined feed height of the second exchange chamber, at a further predetermined flowrate.

The mass exchange operation may be a fractional distillation, a gas-liquid absorption, an extraction of a component from a liquid by bringing it into contact with a gas stream, or a liquid-liquid extraction. In each case, the method according to the invention allows separating the amount of substance that is in the second phase, from the first stream, which is fed into the second chamber, for example it allows separating a liquid that has been condensed within the passageway or that has been entrained by said first stream from the first chamber, which has the advantages described above.

In particular, a step is provided of feeding the secondary portion of the stream at a further predetermined feed height of the second exchange chamber, at a further predetermined flowrate.

In an exemplary embodiment, the separation step comprises a settling step that is performed within the passageway, the settling step comprising a step of forming a head of a highest specific weight portion, selected between the main portion and the secondary portion of the first stream.

Steps can be provided of:
- measuring a head level value;
- comparing the level value with a predetermined reference level value;
- changing the flow rate or the further flow rate, according to whether the highest specific weight portion is the main portion or the secondary portion of the first stream, responsive to the comparison of the level value.

If the mass exchange operation is a distillation, steps can provided of:
- measuring a value of a differential pressure between an upper portion of the first exchange chamber and an upper portion of the second exchange chamber;
- comparing the differential pressure value with a predetermined reference differential pressure value;
- changing the flowrate responsive to the comparison of the differential pressure value.

### Brief description of the drawings

The invention will be made clearer with the following description of an exemplary embodiment thereof, exemplifying but not limitative, with reference to the attached drawings, in which the same reference characters designate the same part or similar parts, throughout the figures of which:
- Fig. 1 is a diagrammatical longitudinal sectional view of a mass transfer column according to an exemplary embodiment of the invention, in which a passageway is provided between a first and a second exchange chamber within the inner partition wall;
- Fig. 2 is a diagrammatical longitudinal sectional view of a mass transfer column according to another exemplary embodiment of the invention, in which two passageways are provided between a first and a second/third exchange chamber, where the passageway is arranged within the dividing wall;
- Fig. 3 is a diagrammatical cross sectional view of a mass transfer column according to the previous exemplary embodiments of the invention;
- Fig. 4 is a diagrammatical longitudinal sectional view of a mass transfer column according to a further exemplary embodiment of the invention, in which a passageway is provided between a first and a second exchange chamber, said passageway arranged directly proximate to the dividing wall;
- Fig. 5 is a diagrammatical cross sectional view of the mass transfer column of Fig. 4;
- Fig. 6 is a diagrammatical longitudinal sectional view of a mass transfer column according to an exemplary embodiment of the invention, in which the phase separation means has means for distributing and feeding the heterogeneous fluid phases into respective portions of a second exchange chamber;
- Fig. 7 is a diagrammatical longitudinal sectional view of the phase separation means according to an exemplary embodiment;
- Fig. 8 is a cross sectional view of the phase separation means of Fig. 7;
- Fig. 9 is a further longitudinal sectional view of the phase separation means according to Fig. 7;
- Fig. 10 is a diagrammatical functional view of the phase separation means of Fig. 7 and 8 in the case of a distillation column according to an exemplary embodiment of the invention;
- Fig. 11 is a diagrammatical longitudinal sectional view of the phase separation means according to another exemplary embodiment;
- Fig. 12 is a longitudinal sectional view of a mass transfer column according to an exemplary embodiment of the invention, in which a refrigerant/condenser is provided along the passageway between a first exchange chamber and a second exchange chamber upstream of the phase separation means, in particular, according to Fig. 6;
- Fig. 13 is another longitudinal sectional view of the mass transfer column of Fig. 11;
- Figs. 14,15 and 18 are cross sectional diagrammatical views of exchange columns according to alternative exemplary embodiments of the passageway that is arranged within the dividing wall;
- Figs. 16 and 17 are diagrammatical cross sectional views of exchange columns according to alternative exemplary embodiments of the dividing wall;
- Fig. 19 is a diagrammatical cross sectional view of an exemplary embodiment of the passageway comprising one or more tubular elements that longitudinally cross/es a dividing wall;
- Figs. 20A and 20B are diagrammatical longitudinal sectional views of an exemplary embodiment of the passageway that longitudinally crosses a dividing wall;
- Figs. 21 and 22 are partial longitudinal sectional views of the upper end portion of columns according to the invention, which show alternative connection modes of the walls;
- Fig. 23 is a flow chart including a longitudinal sectional view of a column according to the invention, which is suitable for carrying out consecutive absorption steps in which respective components of a gas mixture are absorbed into a liquid stream;
- Fig. 24 is a flow chart including a longitudinal sectional view of a column according to the invention, which is suitable for carrying out consecutive liquid-liquid extraction steps, or extractive distillation steps of respective components of a liquid mixture.

In the figures, component that are similar, or have similar functions, have been indicated with the same number.

### Description of a preferred exemplary embodiment

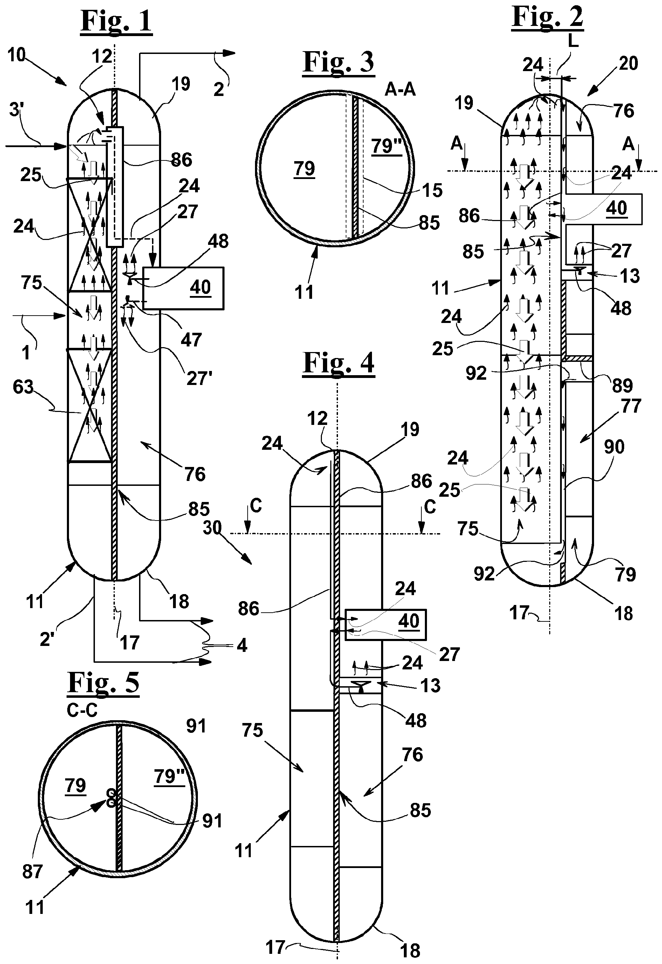

Figs. 1 and 2 diagrammatically show two columns 10,20, respectively, for performing mass transfer operations between a first liquid or gas stream 24 and a second liquid stream 25, according to two exemplary embodiments. Column 10 comprises a vertical container 11, in this case a cylindrical container, in which a longitudinal dividing wall 85 is arranged to divide container 11 into a first longitudinal exchange chamber 75 and a second longitudinal exchange chamber 76. Dividing wall 85 extends longitudinally, and substantially vertically, between a lower end portion 18 and an upper end portion 19 of vertical container 11, in this case it extends along axis 17 of container 11.

Column 10 also comprises a feed means for feeding first fluid stream 24 into said first chamber, an extraction means for extracting said first fluid stream 24 from said second chamber; a source 3' of said second stream 25, and a means 4 for extracting said second stream.

In the exemplary embodiment of Fig. 2, column 20 comprises a container 11 in which a longitudinal dividing wall 85 is arranged to divide container 11 into a first longitudinal exchange chamber 75 and a longitudinal compartment 79. In longitudinal compartment 79 a transverse dividing wall 89 is arranged to divide longitudinal compartment 79 into a second longitudinal exchange chamber 76 and a third longitudinal exchange chamber 77. Independently from the presence of transverse dividing wall 89, longitudinal dividing wall 85 of column 20 is located at a distance L from axis 17 of column 20, instead of being arranged at the axis, as in the case of column 10 of Fig. 1. Therefore, neither first exchange chamber 75 and compartment 79, nor their respective transverse sections are symmetrical. For simplicity's sake, the means for feeding and extracting streams 24 and 25 are omitted in Fig. 2.

Columns 10 and 20 comprise inner passageways 86,90 connecting the exchange chambers to each other. In particular, column 10 (Fig. 1) has a passageway 86 arranged between an upper portion of first exchange chamber 75 and a central portion of second exchange chamber 76. Inner passageway 86 is arranged in a proximity zone 15 of dividing wall 85, i.e. in a region around wall 85. As shown in the cross sectional view of Fig. 3, proximity zone 15 comprises dividing wall 85 itself and the space immediately adjacent to it.

More in detail, Fig. 1 diagrammatically shows a passageway 86 of column 10 that extends between an outlet port 12 of first exchange chamber 75 and an inlet port 13 of second exchange chamber 76. Passageway 86 is adapted to convey a first process stream 24 from outlet port 12 of first exchange chamber 75 to inlet port 13 of second exchange chamber 76.

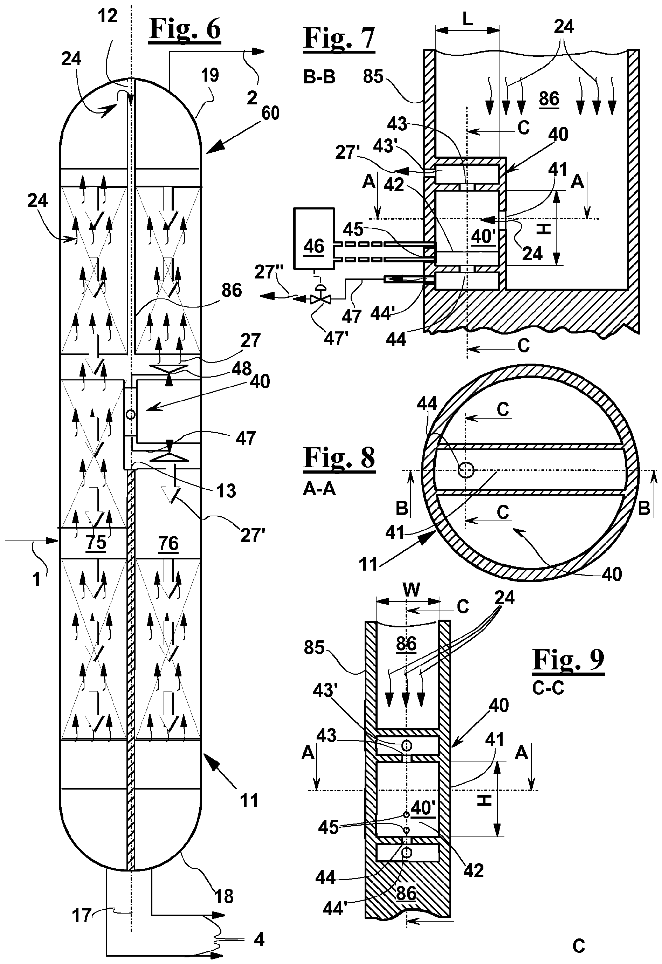

Fig. 4 shows diagrammatically a column 30, according to an alternative exemplary embodiment, which comprises a passageway 86 that is located in a space 15 immediately adjacent to dividing wall 85 (Fig. 3), outside of dividing wall 85. As Fig. 5 shows, passageway 86 can even consist of more than one duct, for example it can consist of two tubes 91. Such duct or ducts 91 can be supported by dividing wall 85 by a conventional fixing means, not depicted. For simplicity's sake, in Fig. 2 the means for feeding and extracting streams 24 and 25 are also omitted.

Still with reference to Fig. 2, column 20 is also provided with a further passageway 90 between an upper portion of third exchange chamber 77 and a lower portion of first exchange chamber 75. In Fig. 2, inner passageways 85,90 of column 20 are shown as passageways inside longitudinal dividing wall 85, and can have any shape selected among the above described possible shapes of passageway 85 of column 10. Passageway 90 can be used for conveying a process stream, in particular first stream 24, from third exchange chamber 77 into first exchange chamber 75.

Exchange chambers 75,76,77 of exchange columns 10,20,30 can comprise a contact means, not shown, for bringing into contact the first fluid phase and the second fluid phase. These contact means can comprise any suitable conventional contact means, for example it can comprise mass transfer trays, and/or loose packings and/or structured packed beds.

As still shown in Figs. 1,2,4, phase separation means 40 are also provided. Phase separation means 40 are arranged along passageway 86, in other words, they are hydraulically/pneumatically connected with passageway 86. Therefore, they are arranged to receive first stream 24 flowing along passageway 86.

In case of consecutive distillation steps or gas-liquid absorption steps, which are performed within respective exchange chambers 75,76, first stream 24 is a gas stream that, while flowing through passageway 86, contains a predetermined amount of a liquid. In this case, phase separation means 40 are arranged to at least partially separate such amount of liquid, thus forming a substantially gaseous main portion 27 and a substantially liquid secondary portion 27' (Fig. 7) of first stream 24.

In the case of distillation, first stream 24 can comprise the overhead vapour coming from first distillation chamber 75, which partially condensate along passageway 86 and forms an amount of liquid. For example, condensation may take place if two fractionation chambers 75,76 operate at sensibly different temperatures, with respect to each other.

In the case of absorption of a gaseous component of stream 24 into an absorption liquid 25, the amount of liquid may be present in passageway 86 due to a liquid entrainment by gas stream 24. Gas stream 24 may be intended for a second absorption step within second exchange chamber 76.

In the case of consecutive solvent-extraction steps, which are carried out within respective extraction chambers 75,76, first stream 24 may be a stream of a liquid to be refined that, while flowing through the passageway 86, entrains a predetermined amount of a liquid solvent. In this case, phase separation means 40 is arranged to at least partially separate such solvent amount, thus forming a main portion 27 substantially consisting of the liquid to be refined, and a secondary portion 27' of first stream 24 substantially consisting of the solvent (Fig. 6).

Briefly, phase separation means 40 allows to remove the amount of a liquid or of a second liquid phase from first stream 24, upstream or at most at inlet port 13 of second exchange chamber 76.

As shown in Figs. 1,2,4, separation means 40 also comprises a feed means 48 for feeding main portion 27 of first stream 24, at a predetermined feed height of second exchange chamber 76. As it will be described hereinafter, secondary portion 27', which contains the quantity of liquid separated by phase separation means 40, can be recycled to the process, for example at a different feed height of the second exchange chamber, in particular in a distillation column. As an alternative, this portion may be intended for recovery or for disposal.

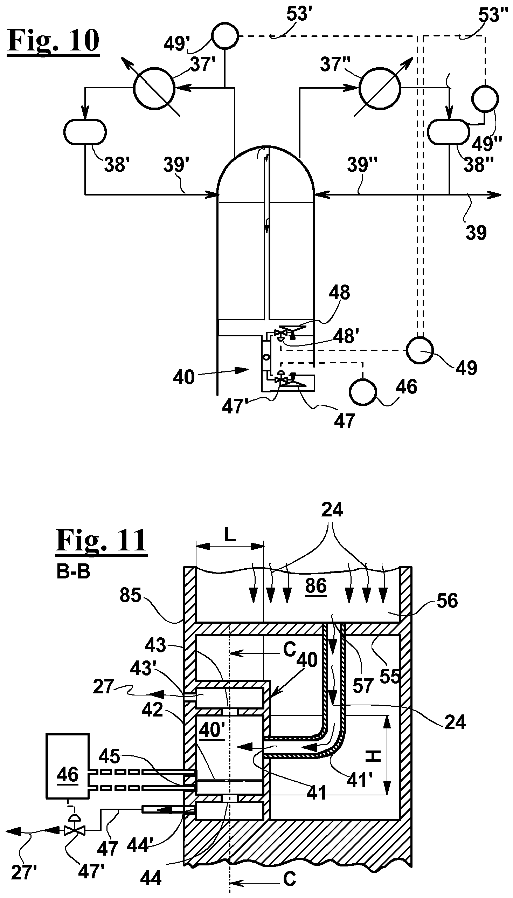

With reference to Fig. 6, a mass transfer column 60 is described, according to an exemplary embodiment of the invention, where phase separation means 40 comprises a feed and distribution means 47,48 (see also Fig. 10) for feeding and distributing main portion 27 and secondary portion 27' of first stream 24. Feed means 47,48 allow to feed the first and the second portions 27,27' at different feed heights of second exchange chamber 76, or into different exchange columns.

In particular, in the case of a distillation or absorption column, feed and distribution means 47 of a liquid portion of first stream 24, which has been separated by separation means 40, is located at a height lower than feed and distribution means 48 for feeding the gas phase, which has also been separated by separation means 40.

With reference to Figs. 7,8 and 9, phase separation means 40, according to an exemplary embodiment, are described more in detail. Such exemplary embodiment is suitable for a mass transfer column that has an inner diameter larger than 1 meter, and/or for a mass transfer column that has a number of trays larger than 20, in particular larger than 30.

Phase separation means 40 comprises a settling chamber 40' formed along passageway 86, i.e. a settling chamber 40' hydraulically and pneumatically connected with passageway 86. In the case shown, settling chamber 40' is made within dividing wall 85.

Settling chamber 40' has an inlet port 41 that is in communication with passageway 86, and is adapted to receive first stream 24, which comprises a first fluid phase and a second fluid phase. For example, in the case of a distillation column or of an absorption column, the first fluid phase is a gas phase, and the second fluid phase is a liquid phase, whereas in the case of a solvent-extraction column the first and the second fluid phases are liquid phases poorly miscible with one another.

Settling chamber 40' is also equipped with flow ports 43,43' to allow the outlet of a lighter fluid phase, which can comprise a gas or a liquid. Flow ports 43,43' are pneumatically or hydraulically connected with feed/distribution means 48. Settling chamber 40' is also equipped with flow ports 44,44' to allow the outlet of the heavier fluid phase, which can be a liquid, or a heavier liquid, and is separated from stream 24 as this is received from settling chamber 40' Flow ports 43,43' are pneumatically or hydraulically connected with feed/distribution means 48. Flow section 43' has a minimum size, such that the passage speed of the gas portion is lower than a predetermined maximum value.

Settling chamber 40' has a size large enough to allow stream 24 to separate into a liquid portion and a gas portion. In particular a liquid head, or a heavier liquid phase 42, is formed within settling chamber 40'. Preferably, settling chamber 40' has a height H that is at least as high as two theoretical stages of second exchange chamber 76. In particular, height H of settling chamber 40' is higher than 1000 mm, more in particular, higher than 1200 mm. The length L of settling chamber 40' is preferably longer than or as long as 1/3 of the inner diameter of the column. The width W of settling chamber 40, defined perpendicularly to the length L, is preferably wider than or as wide as twice the equivalent diameter of outlet port 43', as above-defined.

In an exemplary embodiment, as shown in Fig. 7, the settling chamber has level connections 45 to allow a measure of the level of head 42 by means of a level sensor. As shown in Fig. 10, the level sensor is associated with a logical control unit 46 of the flowrate of the liquid that is fed into the lower part or exchange chamber 77. The flowrate logical control unit 46 is operatively connected to a flowrate regulation means, in particular, to a regulation valve 47'. The level sensor and level connections 45 can be of known type.

Fig. 10 diagrammatically shows an exemplary embodiment in which a device is provided for regulating the flowrate of the vapour that is fed into second distillation chamber 76 of column 60 (Fig. 6). The regulation device comprises two pressure sensors 49' and 49" that are associated with respective pressure transmitters to generate respective pressure signals 53',53" of overhead vapour coming from first exchange chamber 75 and from second exchange chamber 76. The regulation device comprises also a logical comparison and regulation means 49 that is adapted to receive pressure signals 53',53" and to generate a control signal for operating a regulation element 48'. In the exemplary embodiment of Fig. 10, the regulation element comprises a regulation valve 48' that is arranged along feed and distribution means 48 of the vapour portion of first stream 24, as separated by phase separation means 40, in order to operate regulation means 48' responsive to the pressure difference between the overhead vapour of first distillation chamber 75 and the overhead vapour of second distillation chamber 76.

Fig. 11 shows an exemplary embodiment of separation means 40 of Fig. 7, in which a collecting tray 55 is provided in passageway 86, on which a liquid head 56 is formed. A hole is made through collecting tray 55 to allow the flow of the liquid-gas mixture 56 collecting on tray 55. Hole 57 is connected to inlet port 41 by a duct 41' of suitable size.

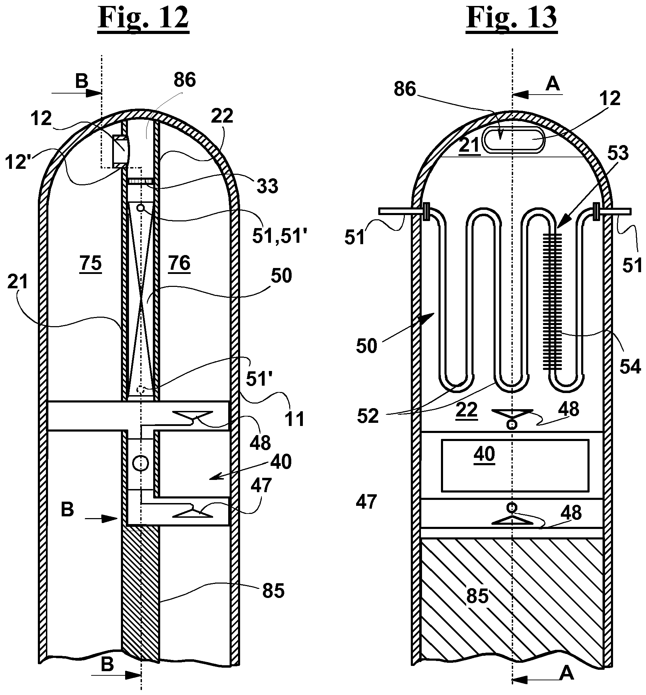

With reference to Fig. 12, a mass transfer column is shown, according to an exemplary embodiment of the invention, in which, besides phase separation means 40, a surface cooling means 50 is provided, which possibly allows at least a partial condensation of first fluid stream 24 (Figs. 1, 2). Like phase separation means 40, also cooling means 50 is preferably arranged along passageway 86, in particular within passageway 86. Cooling means 50 has inlet and outlet openings for a refrigerating fluid 51,51';

Fig. 13 shows an exemplary embodiment of a cooling/partial condensation means 50, which comprises a plurality of U-bent tubular elements 52. In an exemplary embodiment, also shown in Fig. 13, tubular elements 52 can comprise finned tube bundles 53 in which fins 54 are provided.

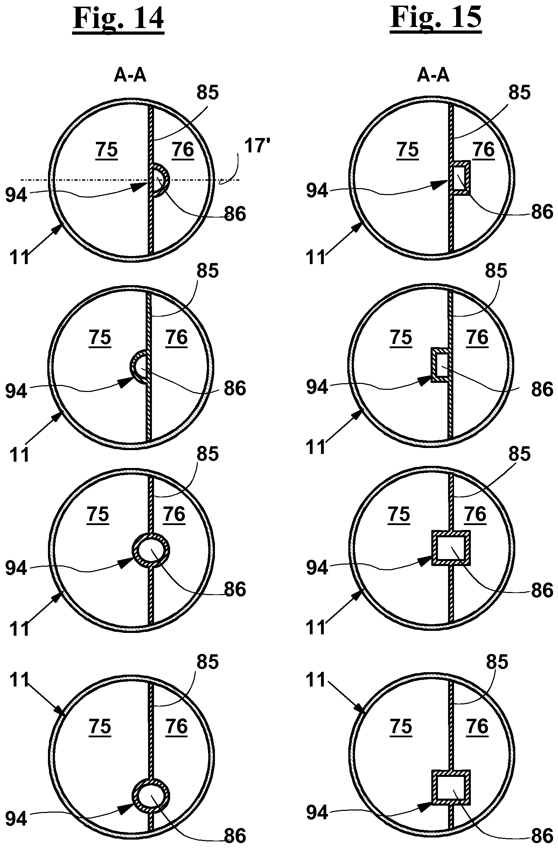

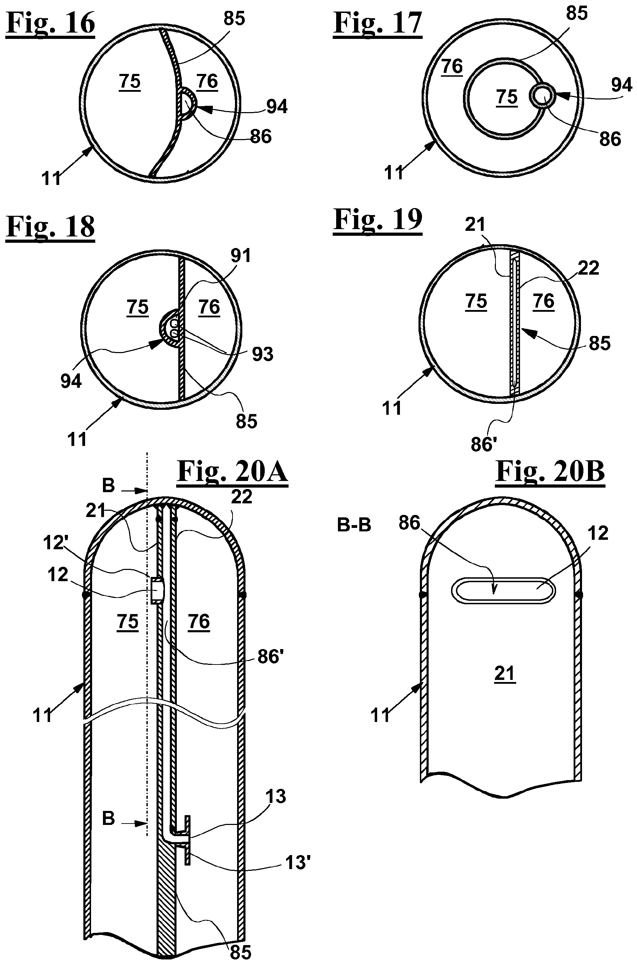

With reference to Figs. 14-19, the vertical dividing wall, for example dividing wall 85 of column 20, can have a portion which extends along a plane (Figs. 14 and 15). As an alternative, vertical dividing wall 85 can at least locally have a curved cross section (Fig. 16). As an alternative, vertical dividing wall 85 can have a curvilinear and/or polygonal closed cross section (Fig. 17), in which first exchange chamber 75 and second exchange chamber 76 are respectively an internal exchange chamber and an external exchange chamber, or vice-versa.

Figs. 19 and 20A show an embodiment of a dividing wall 85 and of a passageway 86 that is arranged within the dividing wall. In this exemplary embodiment, an upper portion of dividing wall 85 comprises two substantially parallel walls 21,22 that define a hollow space 86'. As shown in Figs. 20A and 20B, passageway 86, which comprises one part of hollow space 86', extends between a throat section 12' surrounding outlet port 12 of exchange chamber 75, and a flange 13' surrounding inlet port 13 of exchange chamber 76, according to well known construction techniques. In particular, flange 13 is well suited for connecting a well-known stream distribution means 24 (Fig. 1), which is provided with a standard flange connection.

Passageway 86 of Figs. 20A and 20B occupies longitudinally dividing wall 85. In some alternative exemplary embodiments, which are diagrammatically shown in Figs. 14 and 15, dividing wall 85 can have a less flat shape, for example a square or circular shape, with an enlarged cross section 94. In this case, a portion of the cross section can protrude into one or both chambers 75,76,77 that are separated by dividing wall 85. As each diagram of Figs. 14 and 15 shows, various positions of passageway 86 are possible, with respect to a middle plane 17' of the column.

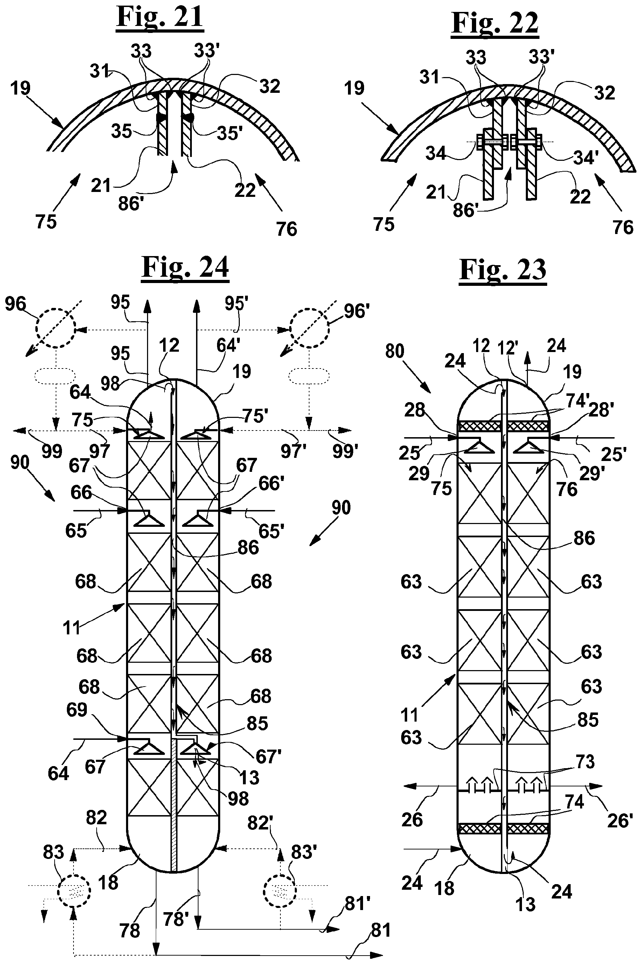

Fig. 21 diagrammatically shows how to create a tight connection of dividing wall 85 and upper end portion 19 of container 10. In this embodiment, upper end portion 19 is prepared by welding two plates 31,32 within bottom 19. In particular, two angle weld joints 33,33' are made at opposite sides of each plate 31,32. Then, head weld joints 35,35' are made between walls 21,22 and plates 31,32. Head weld joints 35,35' cannot be created from inside hollow space 86', however the solution shown here is much more resistant to thermal stress, as well as to the stress due to the differential pressure established between two chambers 75 and 76, than a single, one-side angle weld joint between two walls 21,22 and upper end portion 19.

As an Iternative, as Fig. 22 shows, walls 21,22 can be releasably connected to plates 31,32, for example by means of bolts 34,34'. This way, it is possible to provide dividing wall 85 even at the construction site. Another advantage is that dividing wall 85 can be removed more easily, and it can be displaced more easily, in order to change the transverse section area of two chambers 75,76.

In an exemplary embodiment diagrammatically shown in Fig. 18, passageway 86 inside the dividing wall, diagrammatically shown in Fig. 1, can comprise one or more tubular elements 93. These tubular elements are arranged along the inside of dividing wall 85, and possibly also a hollow space, such as hollow space 86' defined by two substantially parallel walls 21,22 of dividing wall 85.

In column 10 of Fig. 1, the inlet port of second exchange chamber 76 is arranged at a cross section that is located at an intermediate height between a bottom section of second exchange chamber 76 proximate to lower end portion 18, and a top section of second exchange chamber 76 proximate to upper end portion 19. For instance, the inlet port is arranged at a feeding section of exchange chamber 76, which is provided with a distillation means. Outlet port 12 of first exchange chamber 75 is made at the top section of column 10, in particular outlet port 12 is an outlet port made at a region that contains overhead vapour of distillation chamber 12. Therefore, the column of Fig. 1 is adapted to separate a component of a multicomponent mixture by carrying out two consecutive distillation steps. In first distillation chamber 75, the heaviest components are removed from the component to be separated, and the top product contains the product to be separated, along with lighter components. The top product 24 is fed into second distillation chamber 76, for instance, as a vapour phase. In second distillation chamber 76 the lightest components are removed as the top product, and the component to be separated is withdrawn as the bottom product.

Exchange columns 10,20,30 of Figs. 1, 2 and 4 can also be used for consecutive absorption treatments involving a plurality of components of a gas stream. For example, a natural gas containing acid and/or sulphur-containing compounds along with moisture, undergoes a step of removal of the acid components, i.e. a sweetening step, and then a dehydration step. A similar treatment is performed to treat such refinery fractions as a gas produced by crude oil atmospheric distillation, a gas produced by from a conversion (desulfurization, thermal and catalytic cracking, visbreaking, coking) plant, and the like. A similar treatment is performed also to treat a cokery gas or a gas produced by a fuel gas plant using a degradation and/or fermentation process, for example a biogas.

Fig. 23 diagrammatically shows a gas-liquid absorption column 80, according to the invention, for carrying out consecutive absorption steps in order to absorb respective components from a gas mixture 24. A container 11 is divided by a dividing wall 85 into two absorption chambers 75,76, where absorption chamber 75 is a sweetening chamber and absorption chamber 76 is a dehydration chamber for treating of a natural gas stream 24 or a stream of a similar gas, as described above. Stream 24 to be treated enters into sweetening chamber 75 through an inlet port of the bottom section 18 of column 80 and crosses a demister packing 74 for a rough separation of moisture, which is collected in the bottom section 18 by a conventional collection means, not shown. At an upper portion of sweetening chamber 75 a further inlet port 28 is available, to which distribution means 29 is associated for an absorption liquid stream 25. Stream 25 forms the liquid phase of the sweetening treatment and, in particular, it can be an aqueous solution of an organic amine such as diethanolamine. Sweetening chamber 75 is provided with a contact means 63 for bringing liquid stream 25 and gas stream 24 into contact, which can comprise, for example trays or random packing or structured packing. Contact means 63 assists the removal of acid components such as CO₂ and H2S from gas stream 24, which flows upwards within absorption chamber 75. The acid components are adsorbed into liquid stream 25, which flows downwards within absorption chamber 75. Therefore, a countercurrent flow of two streams 24,25 is established inside absorption chamber 75, in which liquid stream 25 turns into a rich, i.e. into an exhaust solution 26. Exhaust solution 26 can undergo a regeneration treatment in a regeneration device, not shown. Exhaust solution 26 is collected on a chimney tray 73 and then flows out of the column through an outlet port that is associated with chimney tray 73. The gas to be treated turns into a wet gas stream 24 which contains a reduced amount of the acid components. Wet gas 24 crosses another demister packing 74' and leaves sweetening chamber 75 through an outlet port 12 that is made through dividing wall 85. From here, wet gas 24 enters into second exchange chamber 76 of column 80, which works as a dehydration chamber. This occurs through inlet port 13, which is also made within dividing wall 85 and is arranged at lower end portion 18 of exchange chamber 76. To this purpose, a passageway 86 is provided within dividing wall 85. Passageway 86 can have one of the forms that have already been described and shown in the above-mentioned figures, including the case of passageway 86 made externally to dividing wall 85.

Wet gas stream 24 crosses a further demister packing 74' for a rough separation of water. At an upper portion of dehydration chamber 76, a further inlet port 28' is available to which distribution means 29' is associated for a liquid stream 25'. Stream 25' forms the liquid phase of the dehydration treatment and, in particular, it can be an aqueous solution of a glycol such as triethylene glycol. Also dehydration chamber 76 is provided with a contact means 63 of the above indicated type. Contact means 63 assists the removal of moisture from wet gas 24 which flows upwards within dehydration chamber 76. The moisture is adsorbed into liquid stream 25', which flows downwards within dehydration chamber 76. Therefore, a countercurrent flow of two streams 24,25' is established inside dehydration chamber 76, in which liquid stream 25' turns into a rich, i.e. an exhaust solution 26'. Exhaust solution 26' can undergo a regeneration treatment in a regeneration device, not shown. Exhaust solution 26' is collected on another chimney tray 73 and then flows out of the column through an outlet port associated with chimney tray 73. The wet gas turns into a dry gas 24, which leaves dehydration chamber 76 through an outlet port 12' of upper end portion 19 of column 80.

In Fig. 24 a liquid-liquid extraction column 90, is diagrammatically shown, according to the invention, for carrying out consecutive solvent-extraction steps of respective components from a liquid mixture 64, or for carrying out extractive distillation steps. The components that are required for extractive distillation only are shown by dashed lines. Container 11 is divided by a dividing wall 85 into first and second extraction chambers 75,76. Liquid stream 64 to be treated enters first extraction chamber 75 through an inlet port 69 of the bottom section. At an upper portion of first extraction chamber 75 a further inlet port 66 is available, to which a distribution means 67 is associated for a stream 65 of a first liquid solvent. Solvent 65 is substantially immiscible with mixture 64 to be treated, but it has a certain affinity for some components to be at least partially removed from mixture 64 to be treated. In other words, such components are soluble into liquid solvent 65, at the operating conditions of first extraction chamber 75. In first extraction chamber 75 a liquid-liquid contact means 68 is provided, even a well-known one, which is adapted to assist a contact between the liquid mixture to be treated and the solvent. Therefore, a countercurrent flow is established in extraction chamber 75 of two substantially immiscible liquid streams 64,65, in which the first solvent turns into a rich solvent 78 that flows out of the column through an outlet port of bottom section 18 of column 90. A portion 81 of the rich solvent is removed from column 90 and sent to a device for recovering the components that have been extracted. Another portion, or recycle, 82 can be reintroduced into the column after flowing through a heat exchanger 83 for maintaining a temperature suitable for the first absorption step. In the case of extractive distillation, exchanger 83 is necessary, and works as the bottom reboiler of first extractive distillation chamber 75.

Instead, the mixture to be treated turns into a first refined mixture 64 in which some components of the mixture to be treated have a sensibly reduced concentration. However, the first refined mixture 64 still contains other components to be separated. A first amount 95 of first refined mixture 64 can be withdrawn through an outlet port of upper end portion 19 of column 90, as a liquid phase, in the case of a common liquid-liquid extraction, and as a vapour phase, in the case of an extractive distillation. Such first amount 95 of first refined mixture 64 can be intended to be stored or to be used immediately thereafter, in a way not shown. In case of the extractive distillation, one part of or the whole first amount 95, which is in vapour phase, enters into a condenser 96. A partial condensation of amount 95 takes place within condenser 96 to form a reflux stream 97, whereas an uncondensed portion 99 is removed. The remainder portion of first refined mixture 64 passes through an outlet port 12 made through dividing wall 85, and enters into second exchange chamber 76 of column 90 through an inlet port 13 of the bottom section of exchange chamber 76. A distribution means 67' is associated to inlet port 13. To this purpose, a passageway 86 is provided through dividing wall 85, which can have one of the forms that have already been described and shown in the above-mentioned figures, including the case of passageway 86 made externally to dividing wall 85, as diagrammatically shown in Fig. 4 and, more in detail, in Fig. 5.

The stream of first refined mixture 64 flows upwards within second extraction chamber 76. At an upper portion of second extraction chamber 76 a further inlet port 66' is available, to which distribution means 67' is associated for distributing a stream of a second liquid solvent 65'. Solvent 65' is substantially immiscible with first refined mixture 64, but has a certain affinity for some components by which it can be at least partially removed from refined mixture 64. In other words, such further/residual components are soluble into liquid solvent 65', at the operating conditions of second extraction chamber 76. Also in second extraction chamber 76 a liquid-liquid contact means 68 is provided as described above. Therefore, a countercurrent flow is established in second extraction chamber 76 of two substantially immiscible liquid streams 64 and 65', in which the second solvent turns into a spent solvent 78' that flows out of the column through an outlet port of bottom section 18 of column 90. A portion 81' of the spent solvent is removed from column 90 and sent to a device for recovering the components that have been extracted. Another part or recycle 82' can be reintroduced into the column after flowing through a heat exchanger 83' for maintaining a temperature suitable for the second extraction step. In the case of extractive distillation, exchanger 83' is provided and works as the bottom reboiler of first extractive distillation chamber 76.

Instead, refined mixture 64 turns into a second refined mixture, or final refined mixture 64', which is substantially or technically free from the components that are extracted by the first liquid solvent 65 and the second liquid solvent 65'. Final refined mixture 64' is withdrawn through a further outlet port of upper end portion 19 of column 90, and sent to a storage device or to a user device, not shown. In the case of extractive distillation, a portion 95' or the whole second refined mixture 64', which is withdrawn in vapour phase, is condensed in a condenser 96'. A partial condensation of amount 95 takes place within condenser 96 to form a reflux stream 97', whereas an uncondensed portion 99' is removed.

The foregoing description of exemplary embodiments of the mass transfer column according to the invention, and of the use of the exchange column, will so fully reveal the invention according to the conceptual point of view, so that others, by applying current knowledge, will be able to modify and/or adapt for various applications such embodiments without further research and without parting from the invention, and it is therefore to be understood that such adaptations and modifications will have to be considered as equivalent to the specific embodiments. The means and the materials to perform the different functions described herein could have a different nature without, for this reason, departing from the field of the invention. It is to be understood that the phraseology or terminology that is employed herein is for the purpose of description and not of limitation.

## Claims

1. A mass exchange column (10,20,30,60,80,90) for exchanging mass between a first fluid stream (24,64) comprising a first fluid phase, and a second fluid stream (25,65) comprising a second fluid phase, wherein said first fluid phase is selected between a liquid phase and a gas phase, wherein said second fluid phase is a liquid phase, said mass transfer column comprising:
- a vertical elongated container (11) having a longitudinal dividing wall (85) within said container (11), said container (11) defining with said dividing wall (85) at least a first exchange chamber (75) and a second exchange chamber (76,77);
- a feed means (1) for feeding said first fluid stream (24) into said first chamber;
- a first extraction means (2) for extracting said first fluid stream (24) from said second chamber;
- a source (3) of said second stream;
- a means (4) for extracting said second stream;
- a contact means (63,83) for causing a contact between said first stream (24,64) and said second stream, said contact means (63) arranged within said first exchange chamber (75) and/or within said second exchange chamber (76,77);
- a longitudinal passageway (86,90) that extends between an outlet port (12) from said first exchange chamber (75) and an inlet port (13) leading into said second exchange chamber (76,77), said passageway arranged in a proximity (15) of said dividing wall (85), for conveying said first stream (24,64) from said first exchange chamber (75) into said second exchange chamber (76,77);
wherein said passageway comprises a portion of the dividing wall, and wherein said contact means (63) and/or said passageway (86,90) are such that in said passageway (86,90) said first stream (24,64) comprises an amount of a substance in said second fluid phase,
- a phase separation means comprising a settling chamber (40') made within said passageway (86), said settling chamber (40') arranged to form a main lighter fluid-phase portion (27) of said first stream (24) and a secondary heavier fluid-phase portion (27') of said first stream (24), wherein said secondary heavier fluid-phase portion (27') comprises at least one part of said amount of substance in said second fluid phase, **characterised in that** said settling chamber comprises
- an inlet port (41) that is in communication with passageway 86, so as to be arranged to receive said first stream (24);
- a first flow port (43,43') to allow the outlet of said main lighter fluid-phase portion (27), comprising a gas or a liquid, said flow port (43,43') pneumatically or hydraulically connected with said feed/distribution means (48) for feeding said main lighter fluid-phase portion (27) of said first stream (24) at a predetermined feed height of said second exchange chamber (76,77),
said settling chamber (40') having:
- a second flow port (44,44') arranged to allow the outlet of said secondary heavier fluid-phase portion (27'), which may be a liquid, or a heavier liquid,
in order to remove said amount of a liquid or of a second liquid phase from said first stream upstream of, or at most, at said inlet port (13) into said second exchange chamber (76,77).

2. An exchange column (60) according to claim 1, wherein said phase separation means (40) comprises a feed means (47) for feeding said secondary heavier fluid-phase portion (27') of said first stream (24) to said second exchange chamber (76,77) at a further predetermined feed height.

3. An exchange column (60) according to claim 1, wherein said height (H) is selected among a height greater than or equal to twice the height of a theoretical separation stage of said second exchange chamber (76,77) and a height (H) greater than or equal to 1000 mm, in particular a height greater than or equal to 1200 mm,
in particular, said transversal dimension (L) is greater than or equal to about 1/3 of an equivalent inner diameter of said mass transfer column (60).

4. An exchange column (60) according to claim 1 or 3, wherein said settling chamber (40') has a second transversal dimension (W), defined perpendicularly to said transversal dimension (L), greater than or equal to twice an equivalent diameter of an outlet port (43') of said main lighter fluid-phase portion (27) of said first stream (24).

5. An exchange column (60) according to claim 2, comprising a cooling means (50) for cooling said first gas stream (24), said cooling means arranged along said passageway (86)
in particular, said cooling means (50) is selected between the group comprised of:
- a surface cooling means;
- a surface cooling means comprising finned tubes (53),
in particular, said cooling means (50) is arranged to cause a condensation of a portion of said first gas stream (24) and is arranged upstream of said phase separation means (40).

6. A mass exchange column (10,20,30,60,80,90) according to claim 1, wherein said dividing wall (85) comprises a portion selected from the group consisting of:
- a portion which extends according to a plane;
- a portion having a curvilinear cross section;
- a portion having a closed curvilinear and/or polygonal cross section, such that said first exchange chamber (75) and said second exchange chamber (76) are an inner chamber and an outer annular chamber, respectively, or vice-versa.

7. A mass exchange column (10,20,80,90) according to claim 1, wherein said longitudinal passageway (86,90) has at least a portion that is arranged within said dividing wall (85).

8. A column (10,20,80,90) according to claim 1, wherein said dividing wall (85) comprises two parallel walls (21,22) and a hollow space (86') defined between said two parallel walls (21,22), and said passageway (86) comprises at least one portion of said hollow space (86') that is limited by said two parallel walls (21,22).

9. A mass exchange column according to claim 1, wherein said passageway (86) is made with one or more tubular elements (93) that is/are longitudinally arranged within said dividing wall (85).

10. A mass exchange column (10,20) according to claim 4, wherein said outlet port (12) of said first exchange chamber (75) is selected from the group consisting of:
- a top outlet port of a top section of said first exchange chamber (75);
- an outlet port of a bottom section of said first exchange chamber (75);
- an intermediate outlet port of an intermediate section of said first exchange chamber (75),
such that said passageway is arranged to feed the second chamber (76) with a top product, a bottom product or a side cut product, respectively, of a separation step that is carried out within said first exchange chamber (75).

11. A mass exchange column (10,20,30,80,90) according to claim 1, wherein said contact means is suitable for carrying out a mass exchange step selected from the group consisting of:
- a fractional distillation step;
- an absorption step of at least one gaseous component of said first stream (24) in said second stream;
- an extraction step of at least one liquid component of said first stream (24) in said second stream;
- an absorption step of at least one liquid component of said second stream in said first stream (24).

12. A method for exchanging mass between a first fluid stream (24,64) and a second fluid (25,65) in a column according to claim 1, wherein the first fluid stream (24,64) comprises a first fluid phase selected between a liquid phase and a gas phase, and said second fluid (25,65) comprises a liquid phase, said method comprising:
- prearranging a vertical elongated container (11) having a longitudinal inner dividing wall (85) defining with said dividing wall (85) at least a first exchange chamber (75) and a second exchange chamber (76,77), wherein a longitudinal passageway (86,90) is provided that extends between an outlet port (12) from said first exchange chamber (75) and an inlet port (13) leading into said second exchange chamber (76,77), said passageway arranged in a proximity (15) of said dividing wall (85), along said passageway (86,90), a phase separation means being provided comprising a settling chamber (40') made within said passageway (86);
- feeding said first fluid stream (24) into said first chamber (75);
- extracting said first fluid stream (24) from said second chamber (76,77);
- feeding said second stream into said vertical elongated container (11);
- extracting said second stream from said vertical elongated container (11);
- causing a contact between said first stream (24,64) and said second stream within said first exchange chamber (75) and/or within said second exchange chamber (76,77);
- conveying said first stream (24,64) from said first exchange chamber (75) into said second exchange chamber (76,77) through said longitudinal passageway (86,90), said first stream (24,64) comprising an amount of a substance in said second fluid phase, wherein said first stream (24) is received into said settling chamber (40') through an inlet port thereof (41);
- in said settling chamber, forming a main lighter fluid-phase portion (27) of said first stream (24) and a secondary heavier fluid-phase portion (27') of said first stream (24), wherein said secondary heavier fluid-phase portion (27') comprises at least one part of said amount of substance in said second fluid phase;
- allowing the outlet of said main lighter fluid-phase portion (27) of said first stream (24), which comprises a gas or a liquid, from said settling chamber (40') through a first flow port (43,43') of said settling chamber (40'), and feeding said main lighter fluid-phase portion (27) at a predetermined feed height of said second exchange chamber (76,77),
**characterised in that** a step is also provided of
- allowing the outlet of said secondary heavier fluid-phase portion (27'), which may be a liquid, or a heavier liquid, from said settling chamber (40') through a second flow port (44,44') of said settling chamber (40'),
so that said amount of substance in said second fluid phase is removed from said first stream upstream of, or at most at, said inlet port (13) into said second exchange chamber (76,77).

13. A method according to claim 12, comprising a step of feeding said secondary heavier fluid-phase portion (27') of said first stream at a further predetermined feed height of said second exchange chamber (76,77), at a further predetermined flowrate.

14. A method according to claim 12, wherein said mass exchange step is a step of distillation, and further steps are provided of:
- measuring a value of a differential pressure between an upper portion of said first exchange chamber and an upper portion of said second exchange chamber;
- comparing said value of differential pressure with a predetermined reference differential pressure value;
- changing said flowrate responsive to said comparison of said differential pressure value.

## Patentansprüche

1. Stoffaustauschkolonne (10, 20, 30, 60, 80, 90) zum Austauschen von Stoffen zwischen einem ersten Fluidstrom (24, 64), umfassend eine erste Fluidphase, und einem zweiten Fluidstrom (25, 65), umfassend eine zweite Fluidphase, wobei die erste Fluidphase ausgewählt ist unter einer flüssigen Phase und einer gasförmigen Phase, wobei die zweite Fluidphase eine flüssige Phase ist, wobei die Stoffaustauschkolonne Folgendes umfasst:
- einen vertikal länglichen Behälter (11) mit einer längsgerichteten Teilungswand (85) im Behälter (11), wobei der Behälter (11) mit der Teilungswand (85) mindestens eine erste Austauschkammer (75) und eine zweite Austauschkammer (76, 77) definiert;
- ein Zufuhrmittel (1) zum Zuführen des ersten Fluidstroms (24) in die erste Kammer;
- ein erstes Extraktionsmittel (2) zum Extrahieren des ersten Fluidstroms (24) aus der zweiten Kammer;
- eine Quelle (3) des zweiten Stroms;
- ein Mittel (4) zum Extrahieren des zweiten Stroms;
- ein Kontaktmittel (63, 83) zum Bewirken eines Kontakts zwischen dem ersten Strom (24, 64) und dem zweiten Strom, wobei das Kontaktmittel (63) in der ersten Austauschkammer (75) und/oder in der zweiten Austauschkammer (76, 77) angeordnet ist;
- einen längsgerichteten Durchgang (86, 90), der sich zwischen einer Auslassöffnung (12) von der ersten Austauschkammer (75) und einer Einlassöffnung (13), die in die zweite Austauschkammer (76, 77) führt, erstreckt, wobei der Durchgang in einer Nähe (15) der Teilungswand (85) angeordnet ist, um den ersten Strom (24, 64) von der ersten Austauschkammer (75) in die zweite Austauschkammer (76, 77) zu führen;
wobei der Durchgang einen Abschnitt der Teilungswand umfasst, und wobei das Kontaktmittel (63) und/oder der Durchgang (86, 90) so sind, dass im Durchgang (86, 90) der erste Strom (24, 64) eine Menge einer Substanz in der zweiten Fluidphase umfasst,
- ein Phasentrennmittel, umfassend eine Absetzkammer (40'), die innerhalb des Durchgangs (86) erzeugt ist, wobei die Absetzkammer (40') angeordnet ist, um einen Hauptabschnitt mit einer leichteren Fluidphase (27) des ersten Stroms (24)
und einen sekundären Abschnitt mit einer schwereren Fluidphase (27') des ersten Stroms (24) zu formen, wobei der sekundäre Abschnitt mit einer schwereren Fluidphase (27') mindestens einen Teil der Menge der Substanz in der zweiten Fluidphase umfasst, **dadurch gekennzeichnet, dass** die Absetzkammer umfasst
- eine Einlassöffnung (41), die sich in Kommunikation mit dem Durchgang 86 befindet, so dass sie angeordnet ist, um den ersten Strom (24) zu empfangen;
- eine erste Strömungsöffnung (43, 43'), um den Auslass des Hauptabschnitts mit einer leichteren Fluidphase (27), umfassend ein Gas oder eine Flüssigkeit, zuzulassen, wobei die Strömungsöffnung (43, 43') pneumatisch oder hydraulisch mit dem Zufuhr-/Verteilungsmittel (48) zum Zuführen des Hauptabschnitts mit einer leichteren Fluidphase (27) des ersten Stroms (24) in einer vorgegebenen Zufuhrhöhe der zweiten Austauschkammer (76, 77) verbunden ist,
wobei die Absetzkammer (40') Folgendes aufweist:
- eine zweite Strömungsöffnung (44, 44'), die angeordnet ist, um den Auslass des sekundären Abschnitts mit einer schwereren Fluidphase (27') zuzulassen, bei dem es sich um eine Flüssigkeit oder eine schwerere Flüssigkeit handeln kann,
um die Menge einer flüssigen oder einer zweiten flüssigen Phase aus dem ersten Strom stromaufwärtig von der oder höchstens an der Einlassöffnung (13) in die zweite Austauschkammer (76, 77) zu entfernen.

2. Austauschkolonne (60) nach Anspruch 1, wobei das Phasentrennmittel (40) ein Zufuhrmittel (47) zum Zuführen des sekundären Abschnitts mit einer schwereren Fluidphase (27') des ersten Stroms (24) zur zweiten Austauschkammer (76, 77) in einer zweiten vorgegebenen Zufuhrhöhe umfasst.

3. Austauschkolonne (60) nach Anspruch 1, wobei die Höhe (H) unter einer Höhe größer oder gleich dem Zweifachen der Höhe einer theoretischen Trennstufe der zweiten Austauschkammer (76, 77) und einer Höhe (H) größer oder gleich 1000, insbesondere einer Höhe größer oder gleich 1200 mm ausgewählt ist,
wobei die Querabmessung (L) insbesondere größer oder gleich 1/3 eines äquivalenten Innendurchmessers der Stoffaustauschkolonne (60) ist.

4. Austauschkolonne (60) nach Anspruch 1 oder 3, wobei die Absetzkammer (40') einen zweiten Querdurchmesser (W) aufweist, der senkrecht zur Querabmessung (L), größer oder gleich dem Zweifachen eines äquivalenten Durchmessers einer Auslassöffnung (43') des Hauptabschnitts mit einer leichteren flüssigen Phase (27) des ersten Stroms (24) definiert ist.

5. Austauschkolonne (60) nach Anspruch 2, umfassend ein Kühlmittel (50) zum Kühlen des ersten Gasstroms (24), wobei das Kühlmittel entlang dem Durchgang (86) angeordnet ist,
insbesondere wobei das Kühlmittel (50) unter der Gruppe ausgewählt ist, umfassend:
- ein Oberflächenkühlmittel;
- ein Oberflächenkühlmittel, umfassend Rippenleitungen (53),
insbesondere wobei das Kühlmittel (50) angeordnet ist, um eine Kondensation eines Abschnitts des ersten Gasstroms (24) zu bewirken, und stromaufwärtig von dem Phasentrennmittel (40) angeordnet ist.

6. Stoffaustauschkolonne (10, 20, 30, 60, 80, 90) nach Anspruch 1, wobei die Teilungswand (85) einen Abschnitt umfasst, ausgewählt aus der Gruppe, bestehend aus:
- einem Abschnitt, der sich entlang einer Ebene erstreckt;
- einem Abschnitt mit einem gekrümmten Querschnitt;
- einem Abschnitt mit einem geschlossenen gekrümmten und/oder polygonalen Querschnitt, so dass die erste Austauschkammer (75) und die zweite Austauschkammer (76) eine Innenkammer bzw. eine Außenringkammer oder umgekehrt sind.

7. Stoffaustauschkolonne (10, 20, 80, 90) nach Anspruch 1, wobei der längsgerichtete Durchgang (86, 90) mindestens einen Abschnitt aufweist, der in der Teilungswand (85) angeordnet ist.

8. Kolonne (10, 20, 80, 90) nach Anspruch 1, wobei die Teilungswand (85) zwei parallele Wände (21, 22) und einen zwischen den zwei parallelen Wänden (21, 22) definierten Hohlraum (86') umfasst, und der Durchgang (86) mindestens einen Abschnitt des Hohlraums (86') umfasst, der durch die zwei parallelen Wände (21, 22) begrenzt ist.

9. Stoffaustauschkolonne nach Anspruch 1, wobei der Durchgang (86) mit einem oder mehreren rohrförmigen Elementen (93) erzeugt wird, die in Längsrichtung in der Teilungswand (85) ist/sind.

10. Stoffaustauschkolonne (10, 20) nach Anspruch 4, wobei die Auslassöffnung (12) der ersten Austauschkammer (75) ausgewählt ist aus der Gruppe bestehend aus:
- einer oberen Auslassöffnung eines oberen Abschnitts der ersten Austauschkammer (75);
- einer Auslassöffnung eines unteren Abschnitts der ersten Austauschkammer (75);
- einer mittleren Auslassöffnung eines mittleren Abschnitts der ersten Austauschkammer (75),
so dass der Durchgang angeordnet ist, um der zweiten Kammer (76) ein oberes Produkt, ein unteres Produkt bzw. seitliches Schnittprodukt eines Trennungsschritts zuzuführen, der in der ersten Austauschkammer (75) durchgeführt wird.

11. Stoffaustauschkolonne (10, 20, 30, 80, 90) nach Anspruch 1, wobei das Kontaktmittel geeignet ist, einen Stoffaustauschschritt auszuführen, ausgewählt aus der Gruppe, bestehend aus:
- einem fraktionierten Destillationsschritt;
- einem Absorptionsschritt mindestens einer gasförmigen Komponente des ersten Stroms (24) im zweiten Strom;
- einem Extraktionsschritt mindestens einer flüssigen Komponente des ersten Stroms (24) im zweiten Strom;
- einen Absorptionsschritt mindestens einer flüssigen Komponente des zweiten Stroms im ersten Strom (24).

12. Verfahren zum Austauschen von Stoffen zwischen einem ersten Fluidstrom (24, 64) und einem zweiten Fluid (25, 65) in einer Kolonne nach Anspruch 1, wobei der erste Fluidstrom (24, 64) eine unter einer flüssigen Phase und einer gasförmigen Phase ausgewählte erste Fluidphase umfasst und das zweite Fluid (25, 65) eine flüssige Phase umfasst, wobei das Verfahren umfasst:
- Voranordnen eines vertikal länglichen Behälters (11) mit einer inneren längsgerichteten Teilungswand (85), der mit der Teilungswand (85) mindestens eine erste Austauschkammer (75) und eine zweite Austauschkammer (76, 77) definiert, wobei ein längsgerichteter Durchgang (86, 90) bereitgestellt ist, der sich zwischen einer Auslassöffnung (12) von der ersten Austauschkammer (75) und einer Einlassöffnung (13), die in die zweite Austauschkammer (76, 77) führt, erstreckt, wobei der Durchgang in einer Nähe (15) der Teilungswand (85) angeordnet ist, wobei entlang dem Durchgang (86, 90) ein Phasentrennmittel bereitgestellt ist, umfassend eine Absetzkammer (40'), die innerhalb des Durchgangs (86) erzeugt ist;
- Zuführen des ersten Fluidstroms (24) in die erste Kammer (75);
- Extrahieren des ersten Fluidstroms (24) aus der zweiten Kammer (76, 77);
- Zuführen des zweiten Stroms in den vertikal länglichen Behälter (11);
- Extrahieren des zweiten Stroms aus dem vertikal länglichen Behälter (11);
- Bewirken eines Kontakts zwischen dem ersten Strom (24, 64) und dem zweiten Strom in der ersten Austauschkammer (75) und/oder in der zweiten Austauschkammer (76, 77);
- Fördern des ersten Stroms (24,64) von der ersten Austauschkammer (75) in die zweite Austauschkammer (76,77) durch den längsgerichteten Durchgang (86, 90), wobei der erste Strom (24, 64) eine Menge einer Substanz in der zweiten Fluidphase umfasst, wobei der erste Strom (24) durch eine Einlassöffnung (41) davon in die Absetzkammer (40') aufgenommen wird;
- in der Absetzkammer Formen eines Hauptabschnitts mit einer leichteren Fluidphase (27) des ersten Stroms (24) und eines sekundären Abschnitts mit einer schwereren Fluidphase (27') des ersten Stroms (24), wobei der sekundäre Abschnitt mit einer schwereren Fluidphase (27') mindestens einen Teil der Menge der Substanz in der zweiten Fluidphase umfasst;
- Zulassen des Auslasses des Hauptabschnitts mit einer leichteren Fluidphase (27) des ersten Stroms (24), die ein Gas oder eine Flüssigkeit umfasst, aus der Absetzkammer (40') durch eine erste Strömungsöffnung (43, 43') der Absetzkammer (40') und Zuführen des Hauptabschnitts mit einer leichteren Fluidphase (27) in einer vorgegebenen Zufuhrhöhe der zweiten Austauschkammer (76, 77),
**dadurch gekennzeichnet, dass** auch ein Schritt bereitgestellt wird des
- Zulassens des Auslasses des sekundären Abschnitts mit einer schwereren Fluidphase (27'), bei der es sich um eine Flüssigkeit oder eine schwerere Flüssigkeit handeln kann, aus der Absetzkammer (40') durch eine zweite Strömungsöffnung (44, 44') der Absetzkammer (40'),
so dass die Menge der Substanz in der zweiten Fluidphase aus dem ersten Strom stromaufwärtig von der oder höchstens an der Einlassöffnung (13) in die zweite Austauschkammer (76, 77) entfernt wird.

13. Verfahren nach Anspruch 12, umfassend einen Schritt des Zuführens des sekundären Abschnitts mit einer schwereren Fluidphase (27') des ersten Stroms in einer weiteren vorgegebenen Zufuhrhöhe der zweiten Austauschkammer (76, 77) bei einer weiteren vorgegebenen Strömungsrate.

14. Verfahren nach Anspruch 12, wobei der Stoffaustauschschritt ein Schritt der Destillation ist und ferner Schritte bereitgestellt werden des:
- Messens eines Werts eines Differentialdrucks zwischen einem oberen Abschnitt der ersten Austauschkammer und einem oberen Abschnitt der zweiten Austauschkammer;
- Vergleichens des Werts des Differentialdrucks mit einem vorgegebenen Differentialdruckreferenzwert;
- Ändern der Strömungsrate in Reaktion auf den Vergleich des Differentialdruckwerts.

## Revendications

1. Colonne d'échange de masse (10, 20, 30, 60, 80, 90) destinée à l'échange d'une masse entre un premier flux de fluide (24, 64) comprenant une première phase fluide, et un second flux de fluide (25, 65) comprenant une seconde phase fluide, ladite première phase fluide étant choisie entre une phase liquide et une phase gazeuse, ladite seconde phase fluide étant une phase liquide, ladite colonne de transfert de masse comprenant :
- un récipient allongé vertical (11) possédant une paroi de séparation longitudinale (85) à l'intérieur dudit récipient (11), ledit récipient (11) définissant avec ladite paroi de séparation (85) au moins une première chambre d'échange (75) et une seconde chambre d'échange (76, 77) ;
- un moyen d'acheminement (1) destiné à acheminer ledit premier flux de fluide (24) dans ladite première chambre ;
- un premier moyen d'extraction (2) destiné à extraire ledit premier flux de fluide (24) de ladite seconde chambre ;
- une source (3) dudit second flux ;
- un moyen (4) destiné à extraire ledit second flux ;
- un moyen de mise en contact (63, 83) destiné à mettre en contact ledit premier flux (24, 64) et ledit second flux, ledit moyen de mise en contact (63) étant agencé à l'intérieur de ladite première chambre d'échange (75) et/ou à l'intérieur de ladite seconde chambre d'échange (76, 77) ;
- un passage longitudinal (86, 90) qui s'étend entre un orifice de sortie (12) partant de ladite première chambre d'échange (75) et un orifice d'entrée (13) menant à ladite seconde chambre d'échange (76, 77), ledit passage étant agencé à proximité (15) de ladite paroi de séparation (85), pour transporter ledit premier flux (24, 64) depuis ladite première chambre d'échange (75) jusque dans ladite seconde chambre d'échange (76, 77) ;
ledit passage comprenant une partie de la paroi de séparation et ledit moyen de mise en contact (63) et/ou ledit passage (86, 90) étant de sorte que dans ledit passage (86, 90) ledit premier flux (24, 64) comprenne une quantité d'une substance dans ladite seconde phase fluide,
- un moyen de séparation de phase comprenant une chambre de décantation (40') établie dans ledit passage (86), ladite chambre de décantation (40') étant agencée pour former une partie principale de phase fluide plus légère (27) dudit premier flux (24) et une partie secondaire de phase fluide plus lourde (27') dudit premier flux (24), ladite partie secondaire de phase fluide plus lourde (27') comprenant au moins une partie de ladite quantité de substance dans ladite seconde phase fluide, **caractérisée en ce que** ladite chambre de décantation comprend
- un orifice d'entrée (41) qui est en communication avec le passage 86, de façon à être agencé pour recevoir ledit premier flux (24) ;
- un premier orifice d'écoulement (43, 43') pour permettre la sortie de ladite partie principale de phase fluide plus légère (27), comprenant un gaz ou un liquide, ledit orifice d'écoulement (43, 43') étant raccordé pneumatiquement ou hydrauliquement audit moyen de distribution/d'acheminement (48) pour acheminer ladite partie principale de phase fluide plus légère (27) dudit premier flux (24) à une hauteur d'acheminement prédéfinie de ladite seconde chambre d'échange (76, 77),
ladite chambre de décantation (40') possédant :
- un second orifice d'écoulement (44, 44') agencé pour permettre la sortie de ladite partie secondaire de phase fluide plus lourde (27'), qui peut être un liquide ou un liquide plus lourd,
afin de retirer ladite quantité d'un liquide ou d'une seconde phase liquide du premier flux en amont dudit orifice d'entrée (13), ou tout au plus au niveau de celui-ci, dans la seconde chambre d'échange (76, 77).

2. Colonne d'échange (60) selon la revendication 1, ledit moyen de séparation de phase (40) comprenant un moyen d'acheminement (47) pour acheminer ladite partie secondaire de phase fluide plus lourde (27') dudit premier flux (24) à ladite seconde chambre d'échange (76, 77) à une hauteur d'acheminement prédéfinie supplémentaire.

3. Colonne d'échange (60) selon la revendication 1, ladite hauteur (H) étant choisie parmi une hauteur supérieure ou égale à deux fois la hauteur d'un étage de séparation théorique de ladite seconde chambre d'échange (76, 77) et une hauteur (H) supérieure ou égale à 1000 mm, en particulier une hauteur supérieure ou égale à 1200 mm,
en particulier, ladite dimension transversale (L) étant supérieure ou égale à environ 1/3 du diamètre interne équivalent de ladite colonne de transfert de masse (60).

4. Colonne d'échange (60) selon la revendication 1 ou 3, ladite chambre de décantation (40') possédant une seconde dimension transversale (W), définie perpendiculairement à ladite dimension transversale (L), supérieure ou égale à deux fois un diamètre équivalent d'un orifice de sortie (43') de ladite partie principale de phase fluide plus légère (27) dudit premier flux (24).

5. Colonne d'échange (60) selon la revendication 2, comprenant un moyen de refroidissement (50) pour le refroidissement dudit premier flux de gaz (24), ledit moyen de refroidissement étant agencé le long dudit passage (86)
en particulier, ledit moyen de refroidissement (50) étant choisi dans le groupe comprenant :
- un moyen de refroidissement de surface ;
- un moyen de refroidissement de surface comprenant des tubes à ailettes (53),
en particulier, ledit moyen de refroidissement (50) étant agencé pour provoquer une condensation d'une partie dudit premier flux de gaz (24) et étant agencé en amont dudit moyen de séparation de phase (40).

6. Colonne d'échange de masse (10, 20, 30, 60, 80, 90) selon la revendication 1, ladite paroi de séparation (85) comprenant une partie choisie dans le groupe constitué par :
- une partie qui s'étend selon un plan ;
- une partie possédant une section transversale curviligne ;
- une partie possédant une section transversale curviligne et/ou polygonale fermée, de sorte que ladite première chambre d'échange (75) et ladite seconde chambre d'échange (76) soient une chambre interne et une chambre annulaire externe, respectivement, ou vice versa.

7. Colonne d'échange de masse (10, 20, 80, 90) selon la revendication 1, ledit passage longitudinal (86, 90) possédant au moins une partie qui est agencée dans ladite paroi de séparation (85).

8. Colonne (10, 20, 80, 90) selon la revendication 1, ladite paroi de séparation (85) comprenant deux parois parallèles (21, 22) et un espace creux (86') défini entre lesdites deux parois parallèles (21, 22), et ledit passage (86) comprenant au moins une partie dudit espace creux (86') qui est délimité par lesdites deux parois parallèles (21, 22).

9. Colonne d'échange de masse selon la revendication 1, ledit passage (86) étant composé d'un ou de plusieurs éléments tubulaires (93) qui est/sont agencé(s) longitudinalement dans ladite paroi de séparation (85).

10. Colonne d'échange de masse (10, 20) selon la revendication 4, ledit orifice de sortie (12) de ladite première chambre d'échange (75) étant choisie dans le groupe constitué par :
- un orifice de sortie supérieur d'une section supérieure de ladite première chambre d'échange (75) ;
- un orifice de sortie d'une section inférieure de ladite première chambre d'échange (75);
- un orifice de sortie intermédiaire d'une section intermédiaire de ladite première chambre d'échange (75),
de sorte que ledit passage soit agencé pour acheminer, dans la seconde chambre (76), un produit supérieur, un produit inférieur ou un produit coupé dérivé, respectivement, d'une étape de séparation qui s'effectue à l'intérieur de ladite première chambre d'échange (75).

11. Colonne d'échange de masse (10, 20, 30, 80, 90) selon la revendication 1, ledit moyen de mise en contact étant adapté pour effectuer une étape d'échange de masse choisie dans le groupe constitué par :
- une étape de distillation fractionnée ;
- une étape d'absorption d'au moins un composant gazeux dudit premier flux (24) dans ledit second flux ;
- une étape d'extraction d'au moins un composant liquide dudit premier flux (24) dans ledit second flux ;
- une étape d'absorption d'au moins un composant liquide dudit second flux dans ledit premier flux (24).

12. Procédé permettant l'échange de masse entre un premier flux de fluide (24, 64) et un second fluide (25, 65) dans une colonne selon la revendication 1, ledit premier flux de fluide (24, 64) comprenant une première phase fluide choisie entre une phase liquide et une phase gazeuse et ledit second fluide (25, 65) comprenant une phase liquide, ledit procédé comprenant :
- l'agencement préalable d'un récipient allongé vertical (11) possédant une paroi de séparation interne longitudinale (85) définissant avec ladite paroi de séparation (85) au moins une première chambre d'échange (75) et une seconde chambre d'échange (76, 77), un passage longitudinal (86, 90) étant disposé qui s'étend entre un orifice de sortie (12) à partir de ladite première chambre d'échange (75) et un orifice d'entrée (13) menant jusque dans ladite seconde chambre d'échange (76, 77), ledit passage agencé à proximité (15) de ladite paroi de séparation (85), le long dudit passage (86, 90), un moyen de séparation de phase étant disposé comprenant une chambre de décantation (40') établie dans ledit passage (86) ;
- l'acheminement dudit premier flux de fluide (24) dans ladite première chambre (75);
- l'extraction dudit premier flux de fluide (24) de ladite seconde chambre (76, 77) ;
- l'acheminement dudit second flux jusque dans ledit récipient allongé vertical (11) ;
- l'extraction dudit second flux dudit récipient allongé vertical (11) ;
- la mise en contact dudit premier flux (24, 64) et dudit second flux dans ladite première chambre d'échange (75) et/ou dans ladite seconde chambre d'échange (76, 77) ;
- le transport dudit premier flux (24, 64) depuis ladite première chambre d'échange (75) jusque dans ladite seconde chambre d'échange (76, 77) par l'intermédiaire dudit passage longitudinal (86, 90), ledit premier flux (24, 64) comprenant une quantité d'une substance dans ladite seconde phase fluide, ledit premier flux (24) étant reçu dans ladite chambre de décantation (40') par un orifice d'entrée de celle-ci (41) ;
- dans ladite chambre de décantation, la formation d'une partie principale de phase fluide plus légère (27) dudit premier flux (24) et une partie secondaire de phase fluide plus lourde (27') dudit premier flux (24), ladite partie secondaire de phase fluide plus lourde (27') comprenant au moins une partie de ladite quantité de substance dans ladite seconde phase fluide ;
- l'autorisation de la sortie de ladite partie principale de phase fluide plus légère (27) dudit premier flux (24), qui comprend un gaz ou un liquide, à partir de ladite chambre de décantation (40') par un premier orifice d'écoulement (43, 43') de ladite chambre de décantation (40'), et l'acheminement de ladite partie principale de phase fluide plus légère (27) à une hauteur d'acheminement prédéfinie de ladite seconde chambre d'échange (76, 77),
**caractérisé en ce qu'**une étape prévoit également
- l'autorisation de la sortie de ladite partie secondaire de phase fluide plus lourde (27'), qui peut être un liquide, ou un liquide plus lourd, de ladite chambre de décantation (40') par un second orifice d'écoulement (44, 44') de ladite chambre de décantation (40'),
afin que ladite quantité de substance dans ladite seconde phase fluide soit retirée dudit premier flux en amont dudit orifice d'entrée (13), ou tout au plus au niveau de ce dernier, dans ladite seconde chambre d'échange (76, 77).

13. Procédé selon la revendication 12, comprenant une étape d'acheminement de ladite partie secondaire de phase fluide plus lourde (27') dudit premier flux à une hauteur d'acheminement prédéfinie supplémentaire de ladite seconde chambre d'échange (76, 77), à un débit prédéfini supplémentaire.

14. Procédé selon la revendication 12, ladite étape d'échange de masse étant une étape de distillation et des étapes supplémentaires prévoyant :
- la mesure d'une valeur d'une différence de pression entre une partie supérieure de ladite première chambre d'échange et une partie supérieure de ladite seconde chambre d'échange ;
- la comparaison de ladite valeur de différence de pression avec une valeur de la différence de pression de référence prédéfinie ;
- le changement dudit débit en réponse à ladite comparaison de ladite valeur de la différence de pression.
